Europäisches Patentamt

European Patent Office

Office européen des brevets

(11) Publication number: **0 424 304 A2**

## (12) EUROPEAN PATENT APPLICATION

(21) Application number: 90500096.4

(22) Date of filing: 10.10.90

(51) Int. Cl.⁵: **B29C 45/42**

(30) Priority: 18.10.89 ES 8903499

(43) Date of publication of application:
24.04.91 Bulletin 91/17

(84) Designated Contracting States:
DE FR GB IT

(71) Applicant: DISENO Y CONSTRUCCION DE
MECANISMOS AUTOMATICOS, S.A. DICOMA,
S.A.
C. Final Dolors Callol, s/n
E-17400 Breda (Girona)(ES)

(72) Inventor: Saenz Albacete, Félix
C. Final Dolors Callol, s/n
E-17400 Breda, (Girona)(ES)

(74) Representative: Ponti Sales, Adelaida
Paseo de Gracia, 33
E-08007 Barcelona(ES)

(54) Moulded part extractor apparatus especially for plastic injection machines.

(57) It comprises an extractor arm (6) which moves between the fixed mould (1) and the mobile mould (2) in order to pick up the piece and extract it from the moulds, characterized in that the extractor arm (6) receives its motion from the mobile mould itself (2) by means of a linking arm (7) between the body (8) of the apparatus and said mould (2), transmitting the movement from the body (8) to the extractor arm (6) by means of a driving gear, in such a way that the movement of the mobile mould (2) and the movement of the extractor arm (6) are synchronized by moving the arm (6) to the moulds (1, 2) while the latter move apart, and withdrawing with the extracted part while the closing up movement of the moulds is taking place.

This reduces stationary times, thereby increasing production.

FIG. 1

# MOULDED PART EXTRACTOR APPARATUS, ESPECIALLY FOR PLASTIC INJECTION MACHINES

The present invention refers to a piece of apparatus for extraction of moulded parts, especially for plastic injection machines.

It refers more particularly to apparatus of the type which includes an extractor arm which moves between the fixed mould and the mobile mould in order to pick up the part and extract it from the moulds.

## BACKGROUND OF THE INVENTION

Extractor apparatus currently available, whether for metal stamping or for moulding of plastic materials, is fitted with an extractor arm which moves between the moulds following opening of the latter.

While the moulded part is being extracted the machine remains stationary, which has negative repercussions on its productivity.

On plastic moulding machines the extractor arm is usually fitted above the machine and moves vertically upwards and laterally in a horizontal direction by pneumatic means along guides. The moulded part is moved from the moulds to the unloading position.

The moulded part than passes through a removal machine to separate the casting of the parts to be produced. While this operation is being carried out the extractor arm returns to pick up the next moulded part.

The injection machine remains stationary in order to permit vertical displacement of the arm for both approach and return runs.

Though for this type of high-production machine, the stationary time might be very small, it can neverthe less be notable within the total time of each injection cycle.

## DESCRIPTION OF THE INVENTION

The apparatus of the invention manages to resolve this disadvantage, eliminating stationary times by carrying out movement of the mobile mould and the extractor arm simultaneously and thus avoiding false manoeuvres.

The moulded part extractor apparatus specially for plastics injection machines, object of the invention, is characterized by the fact that the extractor arm receives its motion from the mobile mould itself by means of a linkage arm between the body of the apparatus and said mould, transmitting the movement from the body to the extractor arm by means of a driving gear, in such a way that the movement of the mobile mould and that of the extractor arm are synchronized by moving the arm to the moulds while the latter separate and withdrawing with the extracted part while the closing up movement is taking place.

As the two movements are carried out simultaneously the moulds do not cease to work, thus achieving increased production of moulded parts.

Since the extractor arm receives movement from the mobile mould itself, false manoeuvres are avoided of the type which can occur with transmissions unlinked to the movement of the mobile mould (pneumatic, electrical, etc.). The extractor arm comes to a halt at the same moment as the mobile mould and at any position of the latter.

The driving gear advantageously includes a pair of coaxial gearwheels fitted to the body of the apparatus, one of which wheels meshes with a fixed rack bar while the other meshes with a rack incorporated in the extractor arm, by means of which driving gear the extractor arm moves simultaneously with the body.

Another characteristic of the apparatus consists in the extractor arm being jointed in such way as to permit lateral movement thereof in order to pass over projecting parts of the mould.

It further includes guides arranged substantially in parallel to the movement of the moulds for movement of the body, and a cylinder whose connecting rod is coupled to the rear end of the extractor arm for lateral movement of said arm.

As set forth above, for plastic injection machines the apparatus of the invention is accompanied by a destapler apparatus for separation of the casting and the parts to be obtained.

This apparatus comprises essentially a pick-up arm which collects the part from the extractor arm to carry it to the destapler apparatus, which is essentially of the conventional type.

## BRIEF DESCRIPTION OF THE DRAWINGS

For a better understanding of all that has been set forth, some drawings are attached which, schematically and solely by way of non-restrictive example, show a practical example of embodiment.

In said drawings, figure 1 is a plan view of the apparatus of the invention together with a plastics injection machine and a destapler apparatus; figure 2 is a partially sectioned elevation view showing the moulds and the destapler apparatus; figures 3 to 9 show the successive work phases of the extractor apparatus applied to a plastics injection machine; figure 10 shows in perspective view a moulded part at the moment of its being picked up by the clamp of the extractor arm; figure 11 shows a perspective view of a moulded part at the moment of its being picked up by the clamp of the associated destapler apparatus pick-up arm.

## DESCRIPTION OF A PREFERRED EMBODIMENT

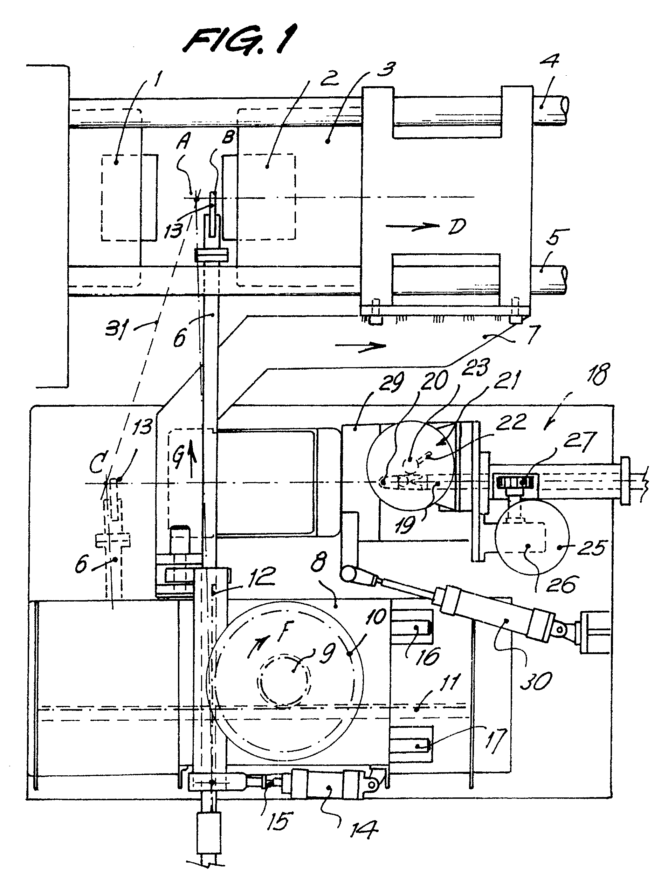

Figure 1 shows a fixed mould 1 and a mobile mould 2, the mould-carrier 3 of which may be slid along the guide columns 4, 5.

In the figure there can also be seen an extractor arm 6 which moves between the fixed mould 1 and the mobile mould 2 in order to pick up the moulded part and extract it from the moulds.

As shown in the figure, the extractor arm 6 receives motion from the mobile mould 3 itself by means of a linkage arm 7 between the body 8 of the apparatus and said mould 2.

Movement from the body 8 to the extractor arm 6 is transmitted by a driving gear which comprises a pair of coaxial gearwheels 9, 10 fitted to the body 8 of the apparatus, one of which wheels 9 meshes with a fixed rack bar 11 while the other meshes with a rack 12 incorporated in the extractor arm 6.

It can also be seen that the extractor arm 6 is jointed in such a way that lateral movement thereof is permitted in order to pass over projecting pieces of the mould 2. The clamp 13 can move from point A to point B. This movement is achieved by means of a cylinder 14 whose connecting rod 15 is coupled to the rear end of the extractor arm 6.

The figure also shows some guides 16, 17 laid out substantially in parallel to the movement of the moulds 2 for the sliding of the body 8.

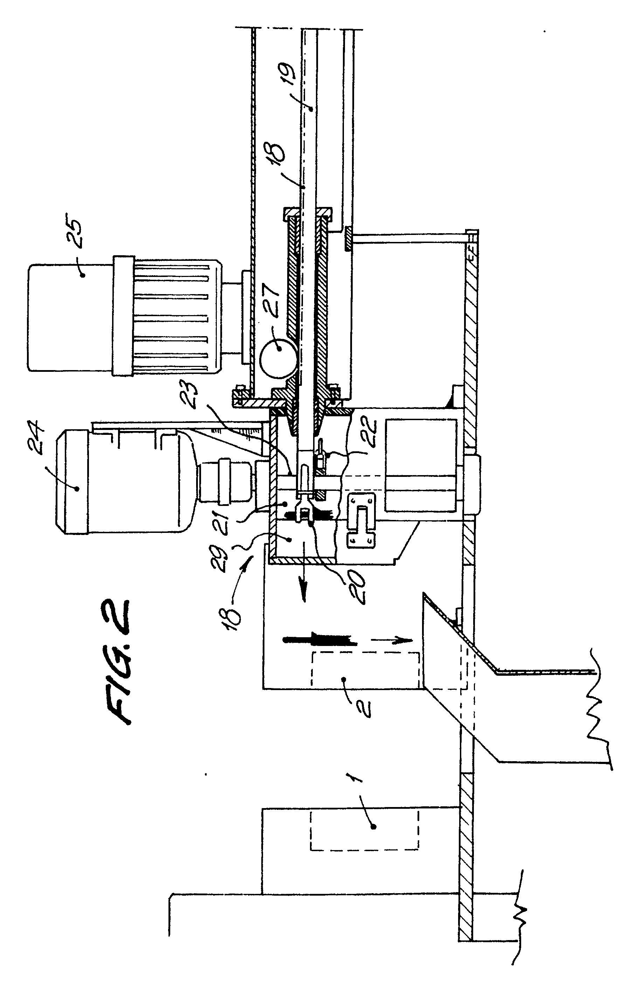

Figures 1 and 2 also show a destapler apparatus 18 for the separation of the casting and the parts to be obtained, which apparatus accompanies the apparatus of the invention.

The destapler apparatus 18 comprises essentially a pick-up arm 19 which picks up by means of a clamp 20 the part from the extractor arm 6 in order to carry it to a chamber 21 where the casting is separated from the parts to be obtained. The figures show an appendage 22 called beater, attached to a giratory spindle 23, which knocks the moulded part In order to detach the casting. The spindle 23 is driven by a motor 24.

The pick-up arm 19 is driven by a motor 25 which through a gear reducer 26 transmits the movement to a pinion 27 which meshes with a rack 28 incorporated into the arm 19.

The chamber 21 is fitted with a door 29 driven by a cylinder 30. The door 29 opens to allow the arm 19 to pass and closes to separate the casting and the parts.

Functioning of the apparatus of the invention is as follows:

In injection position, mould 2 is beside mould 1 and the clamp 13 of the extractor arm 6 is at point C.

The arm 6 moves following the path of line 31 simultaneously with opening of moulds 1, 2. As the mould-carrier 3 moves in the direction of the arrow D it drags with it the linkage arm 7 in the direction of arrow E, and the pinion 9 spins in the direction of arrow F on meshing with the fixed rack bar 11. Simultaneously, the gearwheel 10 moves the arm 6 in the direction of the arrow G.

Thus, as mould 2 moves towards the right of figure 1, the arm 6 moves at the same time towards the right and forwards according to the diagonal path 31.

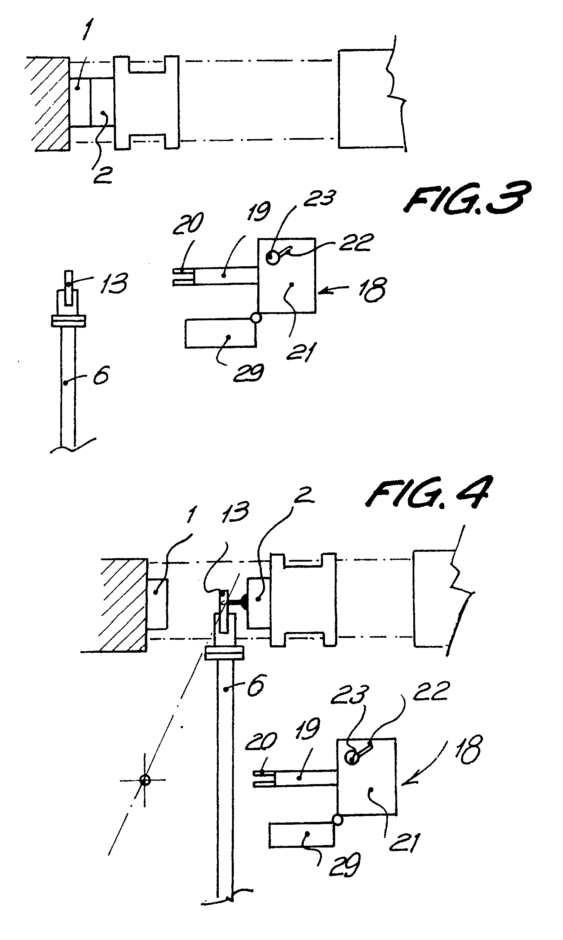

Figures 3 to 9 show the phases of the working cycle.

Figure 3 corresponds to the moment of injection. In this phase the extractor arm 6 is at rear position and the pick-up arm 19 of the destapler apparatus 8 is at casting unload position. The door 29 is open.

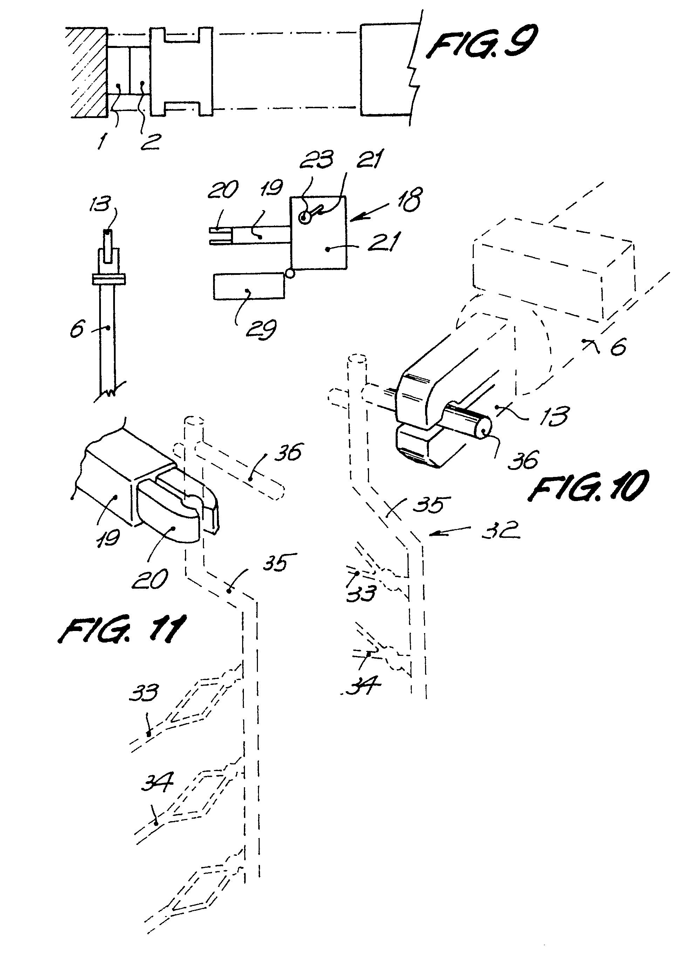

Figure 4 corresponds to the opening position of mould 2. The clamp 13 of the extractor arm 6 is at the position of loading of the moulded part 32. Figure 10 shows that moment in detail. The moulded part 32 includes the parts to be obtained 33 arranged on a support part or casting 35. This casting has an appendage 36 to permit pressure from the clamp 13.

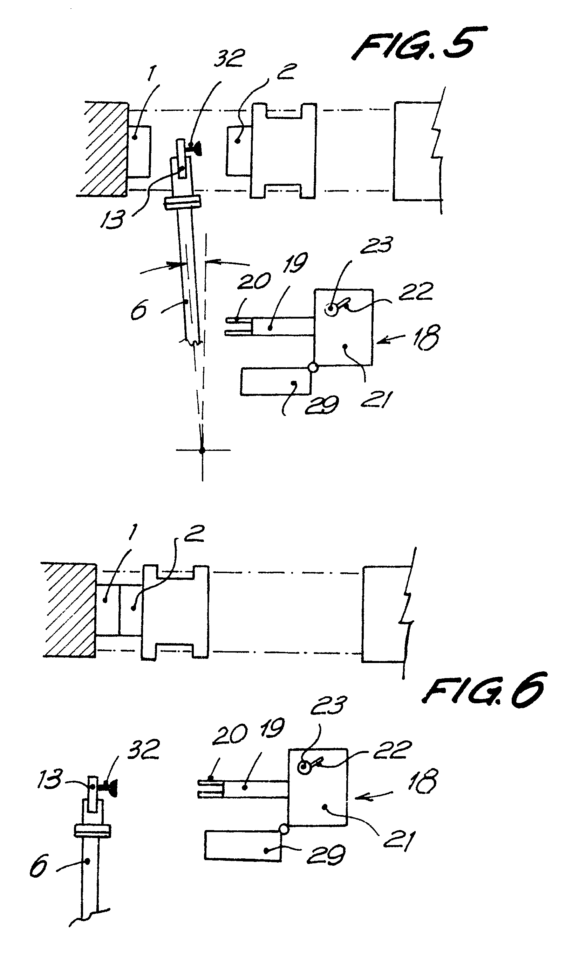

Figure 5 shows the spinning of the arm 6 in order to pass over projecting pieces of the moulds.

Figure 6 corresponds to closure of moulds 1, 2 and simultaneous withdrawal of the extractor arm 6 to the initial position.

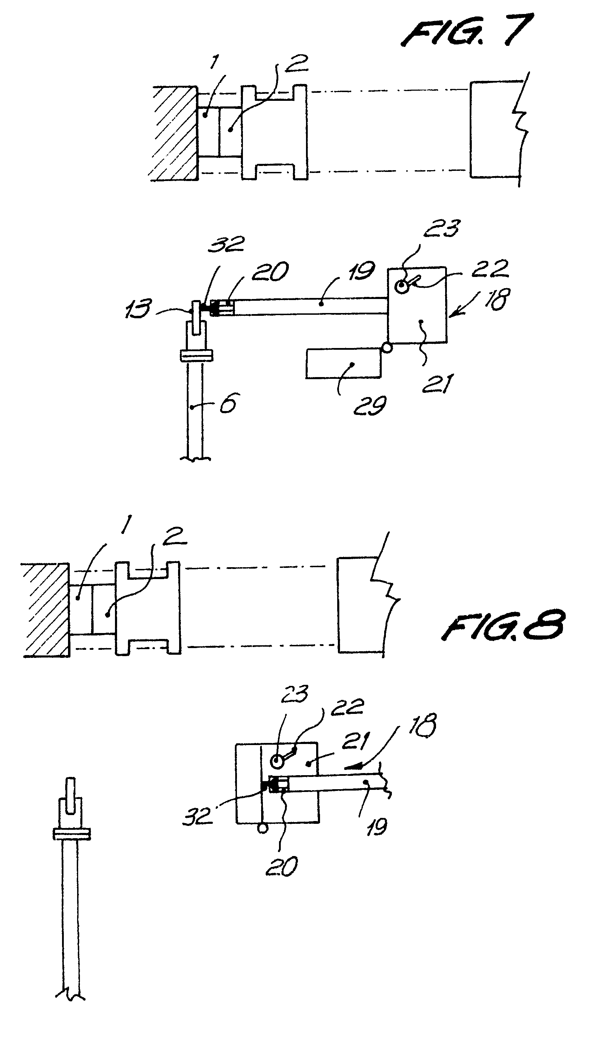

Figure 7 corresponds to the advance of the pick-up arm 19 while a new injection is taking place in the moulds 1,2. The clamp 20 of the arm 19 picks up the moulded part 32. Figure 11 shows that moment in detail. As can be seen, the part 32 is retained by the central body of the casting 35.

Figure 8 shows the layout of the arm 20 inside the chamber 21, the door 29 of which is closed. In this position the beater 22 bangs the part 32 in order to separate by vibration the parts 33,34 from the casting 35. The parts 33,34 come away from the casting 35 and are taken up by a conduit at the bottom of the chamber 21.

Figure 9 shows the advance of the pick-up arm 19 up to the position of casting 35 drop. In that position the clamp 20 releases the casting 35, which goes on to a gathering conduit. This position is maintained during in jection and coincides with the initial layout of the arms 6 and 19 shown in figure 3, thus restarting the complete cycle.

The description has been drafted with reference to a plastics injection machine, though it is understood that the extractor apparatus of the invention could also be applicable to the extraction of any type of moulded or stamped part, as for example a part obtained with a stamping press.

The above description corresponds to a specific embodiment of the invention, but understood to be included within the scope of same are all possible variants thereof accessible to a technician within the sector.

## Claims

1. Moulded part extractor apparatus specially for plastics injection machines, of the type which comprises an extractor arm (6) which moves between the fixed mould (1) and the mobile mould (2) to pick up the moulded part (32) and extract it from the moulds, characterized in that the extractor arm (6) receives its motion from the mobile mould itself (2) by means of a linkage arm (7) between the body (8) of the apparatus and said mould (2), transmitting the movement from the body (8) to the extractor arm (6) by means of a driving gear, in such a way that the movement of the mobile mould (2) and that of the extractor arm (6) are synchronized my moving the arm (6) to the moulds (1, 2) while the latter separate and withdrawing with the extracted part (32) while the closing up movement of the moulds is taking place.

2. Apparatus according to claim 1, characterized in that the driving gear comprises a pair of coaxial gearwheels (9, 10) fitted to the body (8) of the apparatus, one of which wheels (9) meshes with a fixed rack bar (11) while the other (10) meshes with a rack (12) incorporated in the extractor arm (6), by means of which driving gear the extractor arm (6) moves simultaneously with the body (8).

3. Apparatus according to claim 1, characterized in that the extractor arm (6) is jointed in such a way that lateral movement thereof is permitted in order to pass over projecting pieces of the mould (2).

4. Apparatus according to claim 1, characterized in that it includes guides (16, 17) laid out substantially in parallel to the movement of the moulds (2) for movement of the body (8).

5. Apparatus according to claims 1 and 3, characterized in that it includes a cylinder (14) the connecting rod (15) of which is coupled to the rear end of the extractor arm (6) for lateral movement of said arm (6).

EP 0 424 304 A2

# FIG. 1

FIG.2

EP 0 424 304 A2

EP 0 424 304 A2

FIG.3

FIG.4

FIG.5

FIG.6

FIG. 7

FIG.8

FIG. 9

FIG. 10

FIG. 11